# DEMANDE DE BREVET EUROPEEN

(11) **EP 1 995 403 A1**
(43) Date de publication de la demande: **26.11.2008**
(21) Numéro de dépôt: 08305106.0
(22) Date de dépôt: 16.04.2008
(51) Int. Cl.: E05D 11/00

(54) **Ensemble d'articulation d'un capot de véhicule automobile et véhicule automobile correspondant**

(30) Priorité: 25.05.2007 FR 0755274
(71) Demandeur: PEUGEOT CITROËN AUTOMOBILES S.A., 78140 Vélizy Villacoublay (FR)
(72) Inventeur: Gourvennec, Thibault, 91170, Viry Châtillon (FR)

(57) **Abrégé**

L'invention concerne un ensemble d'articulation (6) d'un capot de véhicule automobile, du type comportant au moins une articulation (8) comprenant :
- un élément de support (12) fixe solidaire de la caisse du véhicule ;
- un élément mobile (14) articulé sur l'élément de support (12), et solidaire du capot.

L'ensemble d'articulation (6) comporte en outre au moins un enjoliveur (10) rapporté sur l'articulation (8) et masquant l'articulation (8).

Application à la fabrication de véhicules automobiles.

## Description

La présente invention concerne un ensemble d'articulation d'un capot de véhicule automobile, du type comportant au moins une articulation comprenant :
- un élément de support fixe, solidaire de la caisse du véhicule ;
- un élément mobile articulé sur l'élément de support, et solidaire du capot.

On connaît des ensembles d'articulation de capot constitués par deux charnières situées de chaque côté à l'arrière du capot. Chaque charnière comprend un charnon fixe solidaire de la caisse, et un charnon mobile solidaire du capot et monté rotatif sur le charnon fixe.

Cependant, les charnières sont inesthétiques, et ce d'autant plus lorsque l'une d'elles reçoit un tuyau d'alimentation en liquide de lavage d'une buse de nettoyage du pare-brise du véhicule, tel que décrit dans le document FR-A-2 886 255.

Un but de l'invention est d'améliorer l'esthétique de l'ensemble d'articulation du capot.

A cet effet, l'invention a pour objet un ensemble d'articulation du type précité, caractérisé en ce que l'ensemble d'articulation comporte en outre au moins un enjoliveur rapporté sur l'articulation et masquant au moins partiellement l'articulation.

Suivant des modes particuliers de réalisation, l'ensemble d'articulation comporte une ou plusieurs des caractéristiques suivantes, prise(s) isolément ou suivant toutes les combinaisons techniquement possibles :
- l'enjoliveur comprend des moyens de fixation sur le capot et/ou sur l'élément mobile,
- l'enjoliveur chevauche l'élément de support,
- l'enjoliveur comprend une fente de réception de l'élément de support, la fente étant adaptée pour la pénétration de l'élément de support dans l'enjoliveur lors du déplacement du capot,
- l'enjoliveur comporte des moyens de retenue d'un tuyau, tel qu'un tuyau d'alimentation en liquide de lavage d'au moins une buse localisée au voisinage du pare-brise du véhicule,
- les moyens de retenue comprennent au moins une patte munie de deux doigts de retenue adaptés pour recevoir et serrer le tuyau,
- les moyens de retenue comprennent au moins une gorge de retenue latérale,
- les moyens de retenue comprennent en outre au moins un orifice de fixation adapté pour coopérer avec une attache de fixation prévue sur le tuyau,
- l'enjoliveur est réalisé en une matière plastique injectée.

L'invention a également pour objet un véhicule automobile, caractérisé en ce qu'il comporte un ensemble d'articulation tel que décrit ci-dessus.

L'invention sera mieux comprise à la lecture de la description qui va suivre, donnée uniquement à titre d'exemple, et se référant aux dessins annexés sur lesquels :
- la figure 1 est une vue schématique partielle en perspective de derrière d'un capot et d'une caisse d'un véhicule automobile, et d'un ensemble d'articulation entre le capot et la caisse, selon l'invention ;
- la figure 2 est une vue de côté, de devant et de dessus, en perspective, de l'ensemble d'articulation de la figure 1 et d'un tuyau d'alimentation en liquide de lavage d'une buse de nettoyage d'un pare-brise du véhicule ;
- la figure 3 est une vue schématique de côté, de dessous et de devant, en perspective, de l'ensemble d'articulation et du tuyau de la figure 2 ;
- la figure 4 est une vue schématique en perspective de dessus d'un enjoliveur de l'ensemble d'articulation des figures 1 à 3.

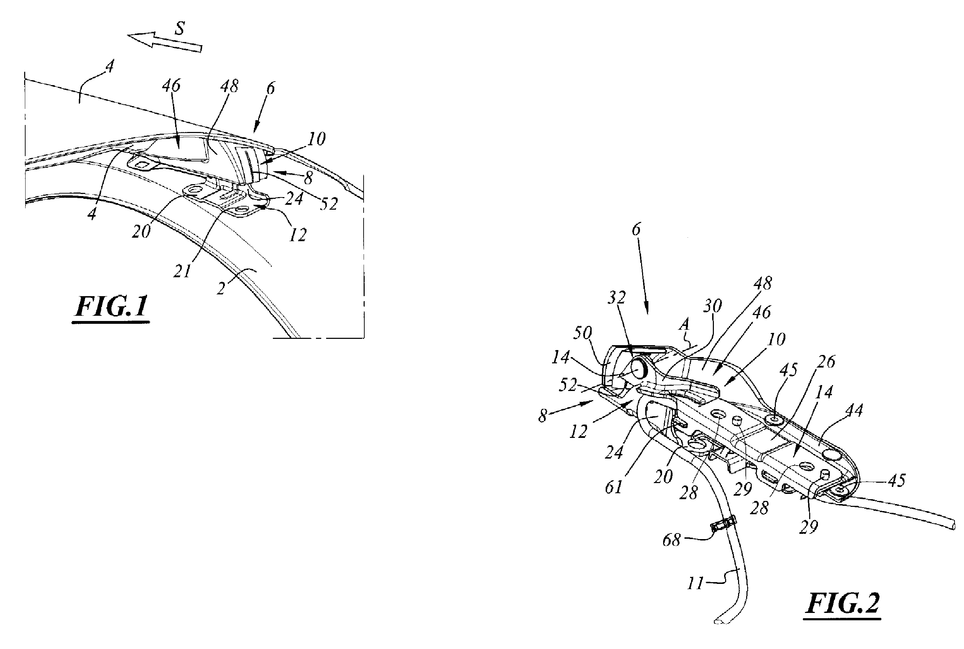

La figure 1 illustre une partie avant d'un véhicule automobile comprenant une caisse 2, un capot 4 et un ensemble d'articulation 6 du capot 4 avec la caisse 2.

Dans tout ce qui suit, les termes "avant" et "arrière" sont considérés par rapport au sens de déplacement usuel vers l'avant du véhicule indiqué par la flèche S sur la figure 1. Les termes "haut", "bas", "gauche" et "droit" s'entendent par rapport à la caisse 2.

L'ensemble d'articulation 6 comprend deux articulations 8 (ou charnières), disposées aux extrémités latérales du capot 4, et deux enjoliveurs 10 rapportés chacun sur une articulation 8 respective et masquant l'articulation 8, seule l'articulation droite et/ou son enjoliveur sont représentés sur les figures 1 à 4.

L'enjoliveur 10 droit assure le passage et le maintien d'un tuyau 11 d'alimentation en liquide de lavage d'au moins une buse de nettoyage (non représentée) d'un pare-brise (non représenté) du véhicule.

Chaque articulation 8 possède un élément de support 12, fixe et solidaire de la caisse 2, et un élément mobile 14 articulé sur l'élément 12 et solidaire du capot 4.

L'élément de support 12 comprend une plaque horizontale 20 munie de deux orifices 21 de fixation sur la caisse 2, et un charnon de support 24 solidaire de la plaque 20 et faisant saillie vers le haut par rapport à la plaque 20, de façon perpendiculaire à cette dernière. Le charnon 24 et la plaque 20 sont venus de matière.

De la même façon, l'élément mobile 14 comprend une plaque 26 sensiblement plane munie de deux orifices 28 de fixation sur le capot 4, et un charnon 30 solidaire de la plaque 26 et faisant saillie vers l'arrière par rapport à la plaque 26. Le charnon 30 et la plaque 26 sont venus de matière.

L'élément mobile 14 est également muni de deux pions 29 faisant saillie vers le capot par rapport à la plaque 26 et adaptés pour être reçus en ajustement serré dans deux trous correspondants (non représentés) prévus dans le capot 4.

Les deux charnons 24, 30 présentent deux surfaces en regard l'une de l'autre et respectivement traversées par une broche 32 assurant une articulation purement rotative entre les deux charnons 24, 30 autour d'un axe "A". La broche 32 est sertie de part et d'autre des charnons 24, 30.

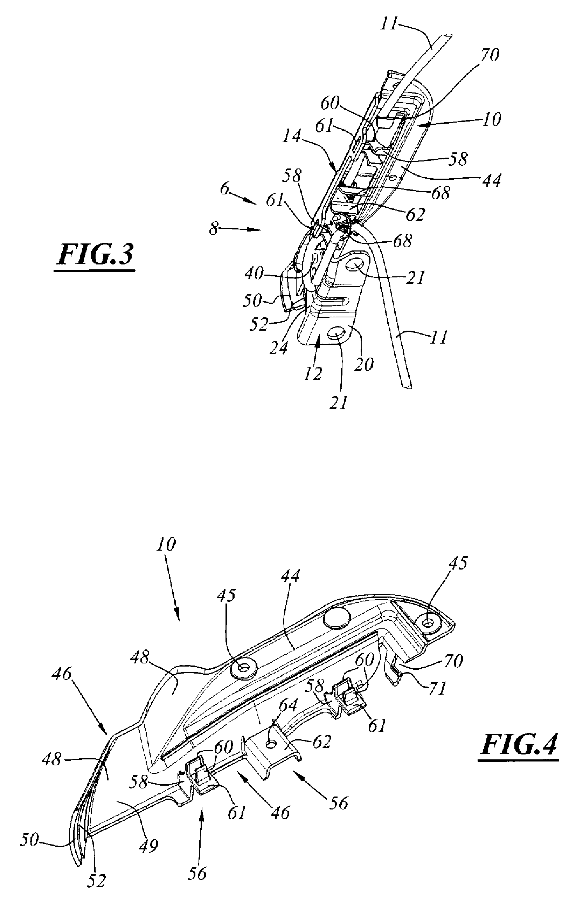

L'élément de support 12 comporte également un pion 40 de butée faisant saillie latéralement par rapport au charnon 24 (voir figure 3) et adapté pour bloquer le charnon 30, en fin de course d'ouverture du capot 4.

L'enjoliveur 10 possède une plaque 44 de fixation sur le capot 4, et un cache 46 prolongeant la plaque 44 et masquant latéralement l'articulation 8, comme illustré sur les figures 1 et 2.

La plaque 44 est munie de deux orifices 45 de fixation pour son rivetage sur le capot 4.

Le cache 46 comprend une partie supérieure 48 faisant saillie par rapport à la plaque 44, vers le capot 4. La partie supérieure 48 possède, à son extrémité arrière, une coupelle arrondie 50 chevauchant l'élément de support 12. A cet effet, la coupelle 50 comprend une fente 52 de réception de l'élément 12, la fente 52 étant adaptée pour la pénétration de l'élément 12 dans la coupelle 50 lors du déplacement du capot 4 (voir figures 1 à 3).

Sur la figure 1, le capot 4 est illustré en position fermée et l'élément de support 12 est alors sorti de la fente 52. En revanche, lorsque le capot 4 est ouvert, l'élément 12 pénètre la fente 52.

Le cache 46 possède également une partie inférieure 49 faisant saillie du côté opposé au capot 4 par rapport à la plaque 44.

La partie inférieure 49 comporte en outre des moyens de retenue 56 du tuyau 11.

Les moyens de retenue 56 sont prévus de telle sorte que le tuyau suit un trajet sensiblement rectiligne le long de l'enjoliveur 10.

Les moyens de retenue 56 comprennent deux pattes 58 munies chacune de deux doigts de retenue 60 faisant saillie vers le capot 4 et adaptés pour recevoir en appui et serrer le tuyau 11 (voir figure 4).

Chaque patte 58 est également munie d'un doigt 61 parallélépipédique de fixation sur l'élément mobile 14, s'étendant latéralement et prévu pour coopérer avec un orifice correspondant de l'élément mobile 14. Les doigts 61 et les orifices correspondants constituent ainsi des moyens de fixation de l'enjoliveur 10 avec l'élément mobile 14.

Les moyens de retenue 56 comprennent également un demi-tube 62 faisant saillie latéralement et muni d'un orifice de retenue 64 adapté pour coopérer avec une attache 68 prévue sur le tuyau 11.

Enfin, les moyens de retenue 56 comprennent une gorge de retenue latérale 70 munie d'un rétrécissement 71 de retenue et constituant le point de sortie du tuyau 11 (voir figures 3 et 4).

L'enjoliveur 10 est réalisé en une matière plastique injectée, tandis que les deux éléments 12 et 14 de l'articulation 8 sont réalisés en acier.

Pour l'assemblage de l'articulation 8, l'opérateur aligne les deux charnons 24, 30, insère la broche 32 de manière traversante et sertie cette dernière.

L'élément de support 12 et l'élément mobile 14 sont ensuite respectivement fixés sur la caisse 2 et le capot 4 par vissage à travers les orifices correspondants 21, 28 et par insertion des pions 29.

Pour la fixation du tuyau 11 sur l'enjoliveur 10, le tuyau 11 est placé dans les deux pattes 58 et la gorge 70 de l'enjoliveur 10, et l'attache 68 est enfoncée à travers l'orifice 64 du demi-tube 62.

Pour la fixation de l'enjoliveur 10 sur le capot 4, les deux doigts de fixation 61 sont d'abord insérés dans l'élément 14, puis la plaque 44 est rivetée sur le capot 4 au moyen de rivets en matière plastique traversant les orifices correspondants 45.

Une fois monté, l'enjoliveur 10 masque l'articulation 8 de telle sorte qu'elle n'est que peu visible par un utilisateur, lors de l'ouverture du capot 4.

En outre, l'enjoliveur 10 assure une fixation rapide et peu coûteuse du tuyau 11. En effet, sans enjoliveur 10, il serait nécessaire de prévoir un nombre plus important d'attaches 68.

D'ailleurs, l'attache 68 prévue pour coopérer avec l'orifice 64 est facultative. En variante, le tuyau 11 n'est fixé sur l'enjoliveur 10 qu'au moyen des pattes 58 et de la gorge 70.

## Revendications

1. Ensemble d'articulation (6) d'un capot (4) de véhicule automobile, du type comportant au moins une articulation (8) comprenant :
- un élément de support (12) fixe, solidaire de la caisse (2) du véhicule ;
- un élément mobile (14) articulé sur l'élément de support (12), et solidaire du capot (4) ;
**caractérisé en ce que** l'ensemble d'articulation (6) comporte en outre au moins un enjoliveur (10) rapporté sur l'articulation (8) et masquant au moins partiellement l'articulation (8).

2. Ensemble d'articulation (6) selon la revendication 1, **caractérisé en ce que** l'enjoliveur (10) comprend des moyens de fixation sur le capot (4) et/ou sur l'élément mobile (14).

3. Ensemble d'articulation (6) selon la revendication 1 ou 2, **caractérisé en ce que** l'enjoliveur (10) chevauche l'élément de support (12).

4. Ensemble d'articulation (6) selon l'une quelconque des revendications précédentes, **caractérisé en ce que** l'enjoliveur (10) comprend une fente (52) de réception de l'élément de support (12), la fente (52) étant adaptée pour la pénétration de l'élément de support (12) dans l'enjoliveur (10) lors du déplacement du capot (4).

5. Ensemble d'articulation (6) selon l'une quelconque des revendications précédentes, **caractérisé en ce que** l'enjoliveur (10) comporte des moyens de retenue (56) d'un tuyau (11), tel qu'un tuyau d'alimentation en liquide de lavage d'au moins une buse localisée au voisinage du pare-brise du véhicule.

6. Ensemble d'articulation (6) selon la revendications 5, **caractérisé en ce que** les moyens de retenue (56) comprennent au moins une patte (58) munie de deux doigts de retenue (60) adaptés pour recevoir et serrer le tuyau (11).

7. Ensemble d'articulation (6) selon la revendication 5 ou 6, **caractérisé en ce que** les moyens de retenue (56) comprennent au moins une gorge (70) de retenue latérale.

8. Ensemble d'articulation (6) selon l'une quelconque des revendications 5 à 7, **caractérisé en ce que** les moyens de retenue (56) comprennent en outre au moins un orifice (64) de fixation adapté pour coopérer avec une attache de fixation (68) prévue sur le tuyau (11).

9. Ensemble d'articulation (6) selon l'une quelconque des revendications précédentes, **caractérisé en ce que** l'enjoliveur (10) est réalisé en une matière plastique injectée.

10. Véhicule automobile, **caractérisé en ce qu'**il comporte un ensemble d'articulation (6) selon l'une quelconque des revendications précédentes.
